# EUROPEAN PATENT SPECIFICATION

(11) **EP 2 331 477 B1**
(45) Date of publication and mention of the grant of the patent: **07.03.2012**
(21) Application number: 09780670.7
(22) Date of filing: 15.07.2009
(51) Int. Cl.: C04B 20/10, C04B 28/36, C04B 40/00

(54) **PROCESSES FOR PREPARING SULPHUR COMPOSITES AND ORGANOSILANE COUPLING AGENTS**
VERFAHREN ZUR HERSTELLUNG VON SCHWEFELKOMPOSITEN UND ORGANOSILAN-KUPPLUNGSMITTELN
PROCÉDÉS DE PRÉPARATION DE COMPOSITES DU SOUFRE ET AGENTS DE COUPLAGE ORGANOSILANES

(30) Priority: 01.08.2008 EP 08161659
(43) Date of publication of application: 15.06.2011
(73) Proprietor: Shell Internationale Research Maatschappij B.V., 2596 HR The Hague (NL)
(72) Inventor: LANKSHEAR, Michael David, NL-1030 CM Amsterdam (NL); MEURS, Jan Hermen Hendrik, NL-1031 CM Amsterdam (NL); POSTHUMUS, Willem, NL-5612 AZ Eindhoven (NL); VERBIST, Guy Lode Magda Maria, NL-1031 CM Amsterdam (NL); VERBRUGGEN, Marloes, NL-5612 AZ Eindhoven (NL)
(74) Representative: Matthezing, Robert Maarten
(86) International application number: PCT/EP2009/059109
(87) International publication number: WO 2010/012601

(56) References cited:
- WO-A-2007/065920
- GB-A- 1 394 135
- JP-A- 7 290 024
- JP-A- 10 114 565
- US-A- 4 164 428
- US-A- 5 678 234
- US-B1- 6 294 683
- ZHUKOV ET AL: "Binder for construction and maintenance of road paving" CHEMICAL ABSTRACTS, AMERICAN CHEMICAL SOCIETY, US, vol. 92, no. 26, 30 June 1980 (1980-06-30) , page 281, XP000185844 ISSN: 0009-2258
- MARCINIEC B ET AL: "SILANE COUPLING AGENTS. PART IV - SULPHUR-CONTAINING SILANES" INTERNATIONAL POLYMER SCIENCE AND TECHNOLOGY, RAPRA TECHNOLOGY, SHREWABURY, GB, vol. 22, no. 2, 1 February 1995 (1995-02-01), pages T/83-T/87, XP000523477 ISSN: 0307-174X

## Description

### Field of the Invention

The invention relates to a process for preparing sulphur composites. The invention further relates to a process for preparing an organosilane coupling agent.

### Background of the Invention

Sulphur-containing organosilane compounds are used as coupling agents in rubber compounds, and may also be used as adhesion primers for glass and metals. The compounds typically correspond to the general formula: 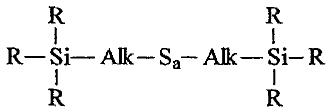 wherein a is an integer from 2 to 10, Alk is an alkylene group and the R groups are independently chosen from alkyl, alkoxy, aryl, aryloxy, acyloxy and halogen groups.

Such compounds can also be used as coupling agents in sulphur composites. As described in WO 2007/065920, polysulphide-containing coupling agents can reduce the water uptake and improve the mechanical properties of sulphur composites such as sulphur cement.

GB 1 394 135 discloses a method of manufacturing sulphur-containing organosilane compounds wherein halogen-containing organosilanes are reacted with compounds such as Na₂S₂, Na₂S₄ and K₂S₃. The reaction can be carried out in the absence of a solvent, but it is preferred to use an organic solvent such as acetone or alcohols.

US 6,294,683 discloses an alternative method of manufacturing sulphur-containing organosilane compounds wherein a halogen-containing organosilane is reacted with a compound such as sodium polysulphide in the presence of an aqueous phase containing a metal salt and in the presence of a filler.

The present inventors have sought to provide methods of preparing sulphur composites that comprise sulphur-containing organosilane compounds. The present inventors have also sought to provide a method of preparing sulphur-containing organosilane compounds.

### Summary of the Invention

Accordingly the present invention provides a process for preparing an organosilane coupling agent, comprising a step of combining a compound of formula (I): 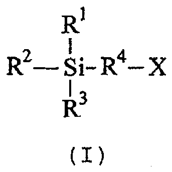 wherein R¹, R² and R³ are independently chosen from alkoxy, acyloxy, aryloxy, alkyl, aryl and halogen, wherein R⁴ is alkylene and wherein X is a leaving group chosen from the group consisting of halogen, carboxylate, nitro, azide, thiocyanate, ammonium, phosphonium and sulfonate; with a compound of formula (II):

MₘSn (II)

wherein M is a nitrogen-containing cation, a phosphorus-containing cation or a metal atom, m is 1 or 2 and n is from 1 to 8, or M is hydrogen, m is 2 and n is 1; in the presence of molten sulphur, wherein the weight ratio of sulphur to the compound of formula (I) is at least 1:5.

The inventors have found that in the presence of an excess of molten sulphur, compounds of formula (I) and (II) react to provide organosilane coupling agents. The sulphur is essentially functioning as the reaction medium. This can be contrasted with known processes wherein organosilane coupling agents are prepared in organic or aqueous solvents, or in the absence of a solvent. The inventors have further found that reaction of compounds of formula (I) and (II) in the presence of sulphur can be used to provide sulphur composites - comprising organosilane coupling agents. Therefore the present invention further provides a process for preparing a sulphur composite comprising at least 7wt% sulphur and at least 5wt% of filler and/or aggregate, comprising combining molten sulphur with filler and/or aggregate, with a compound of formula (I): 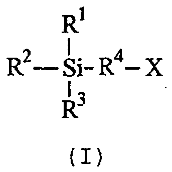 wherein R¹, R² and R³ are independently chosen from alkoxy, acyloxy, aryloxy, alkyl, aryl and halogen, wherein R⁹ is alkylene and wherein X is a leaving group chosen from the group consisting of halogen, carboxylate, nitro, azide, thiocyanate, ammonium, phosphonium and sulfonate; and with a compound of formula (II):

MₘSₙ (II)

wherein M is a nitrogen-containing cation, a phosphorus-containing cation or a metal atom, m is 1 or 2 and n is from 1 to 8, or M is hydrogen, m is 2 and n is 1.

Preparing the organosulphide coupling agents within an excess of sulphur is an advantageous route for preparing sulphur composites. Organosulphide coupling agents improve the properties of sulphur composites, and preparation of the coupling agents within the sulphur avoids having to separate or purify the coupling agents and also helps to provide homogeneous distribution of the coupling agent within the sulphur composite. It is thought that the organosulphide coupling agents bond to the surfaces of the filler and/or aggregate in the sulphur composite.

### Detailed Description of the Invention

The inventors have found that compounds of formula (I) and (II) can be combined in the presence of molten sulphur, thereby providing organosulphide coupling agents. The exact structure of the organosilane coupling agent that results from the reaction of compounds of formula (I) and (II) in the presence of molten sulphur will depend upon the reagents and reaction conditions that are chosen, but the inventors believe that the coupling agents consist of a polysulphide bridge and one or two organosilane end groups of formula: 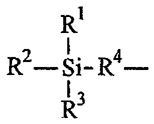 If there is only one end group, it is expected that one end of the polysulphide bridge will terminate with hydrogen or with a cation.

A sulphur composite comprises sulphur and filler and/or aggregate. The term "sulphur composite" covers sulphur cement, sulphur mortar, sulphur concrete and sulphur-extended asphalt. The term "filler" is used to describe particulate inorganic material, typically with an average particle size of from 0.1µm to 0.1mm. Examples of fillers are fly ash, limestone, quartz, iron oxide, alumina, titania, graphite, gypsum, talc, mica, carbon black or combinations thereof. The term "aggregate" covers fine aggregate, inorganic particles with an average diameter of from 0.1mm to 5mm, and coarse aggregate, inorganic material with an average diameter of greater than 5mm. The maximum diameter of the coarse aggregate is usually less than 10% of the smallest dimension of the cast object. An example of fine aggregate is sand and examples of coarse aggregate are gravel or rock. Sulphur cement is a mixture of sulphur and filler, typically with a filler content of from 5 to 50wt%, based upon the weight of the sulphur cement. Sulphur mortar is a mixture of sulphur, filler and fine aggregate, typically with a sulphur content of from 10 to 30wt%, a filler content of up to 25wt% and a fine aggregate content of from 30 to 80wt%, based upon the weight of the sulphur mortar. Sulphur concrete is a mixture of sulphur, filler, coarse aggregate and optionally fine aggregate, typically with a sulphur content of from 8 to 20wt%, a filler content of from 5 to 30wt% and an aggregate content of from 25 to 75wt%. Sulphur extended asphalt is a mixture of a binder (typically a bituminous binder), sulphur and aggregate.

There are a number of possibilities for combining the various components that will ultimately be incorporated into the sulphur composite. The components are sulphur, filler and/or aggregate, the compound of formula (I) and the compound of formula (II). Several possible embodiments are outlined below, but further possible embodiments may be envisaged.

In a first embodiment of the invention, sulphur is combined with a compound of formula (I) and a compound of formula (II) to provide a sulphur product, comprising at least 50wt% sulphur. This sulphur product comprises an organosulphide coupling agent, formed by the reaction of the compounds of formula (I) and (II) and sulphur. The sulphur product is then further combined with filler/aggregate and optionally with additional sulphur to provide sulphur composites.

In a second embodiment of the invention, sulphur is combined with a compound of formula (I) to provide a sulphur product comprising at least 50wt% sulphur and comprising the compound of formula (I). This sulphur product is then further combined with a compound of formula (II), with filler/aggregate and optionally with additional sulphur to provide sulphur composites. When the sulphur product is combined with the compound of formula (II), an organosulphide coupling agent is formed.

In a third embodiment of the invention, sulphur is combined with a compound of formula (II) to provide a sulphur product comprising at least 50wt% sulphur and comprising the compound of formula (II). This sulphur product is then further combined with a compound of formula (I), with filler/aggregate and optionally with additional sulphur to provide sulphur composites. When the sulphur product is combined with the compound of formula (I), an organosulphide coupling agent is formed.

In a fourth embodiment of the invention, filler/aggregate is treated with a compound of formula (I) to provide pre-treated filler/aggregate. The compound of formula (I) is likely to react with the surface of the filler/aggregate such one of the R¹, R² or R³ groups are displaced, and the organosilane groups are chemically attached to the surface of the filler/ag-gregate. The pre-treated filler/aggregate is then further combined with a compound of formula (II) and with sulphur to provide sulphur composites. When the pre-treated filler/aggregate is combined with the compound of formula (II) and with sulphur, an organosulphide coupling agent is formed. The organosulphide coupling agent is bound to the filler/aggregate.

In a fifth embodiment of the invention, the third and fourth embodiments of the invention are combined. A sulphur product comprising at least 50wt% sulphur and comprising the compound of formula (II) is combined with pre-treated filler/aggregate that has been treated with a compound of formula (I), and is optionally combined with additional sulphur. When the pre-treated filler/aggregate is combined with the sulphur product comprising a compound of formula (I), an organosulphide coupling agent is formed. The organosulphide coupling agent is bound to the filler/aggregate.

In a sixth embodiment of the invention, sulphur, the compounds of formula (I) and (II) and the filler/aggregate are all combined to form sulphur composites. The compounds of formula (I) and (II) and the filler/aggregate may all be added at the same time to molten sulphur. Alternatively the compounds of formula (I) and (II) and the filler/aggregate may be added sequentially, in any order, to the molten sulphur. The resulting sulphur product comprises an organosulphide coupling agent, formed by the reaction of the compounds of formula (I) and (II) and sulphur.

The processes of the invention use a compound of formula (I): 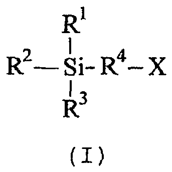 and/or a compound of formula (II):

MₘSₙ (II)

In the compound of formula (I), R¹, R² and R³ are independently chosen from alkoxy, acyloxy, aryloxy, alkyl, aryl and halogen. Preferably R¹, R² and R³ are independently chosen from alkoxy, acyloxy and aryloxy groups and more preferably, R¹, R² and R³ are independently chosen from alkoxy groups. Most preferably R¹, R² and R³ are all the same and are alkoxy groups. Preferred alkoxy groups are C₁₋₄ alkoxy groups, most preferably ethoxy and methoxy groups. R⁴ is alkylene, preferably C₁₋₆ alkylene and most preferably propylene. X is a leaving group chosen from the group consisting of halogen, carboxylate, nitro, azide, thiocyanate, ammonium, phosphonium and sulfonate (e.g. tosyl, triflate, mesyl) and is more preferably halogen. Preferred halogens are chlorine, bromine or iodine, more preferably chlorine or bromine and most preferably chlorine.

In the compound of formula (II), M is a metal atom, a nitrogen-containing cation or a phosphorus-containing cation, m is 1 or 2 and n is from 1 to 8, or M is hydrogen, m is 2 and n is 1. Preferably m is 2. Suitable nitrogen-containing cations are ammonium cations of formula A₄N⁺ wherein A is hydrogen or alkyl. Suitable phosphorus-containing cations are phosphonium cations of formula B₄P⁺ wherein B is hydrogen, alkyl or aryl. M may be a divalent metal ion, e.g. an alkaline earth metal ion such as calcium, but is preferably a monovalent metal ion. Preferably M is an alkali metal ion (more preferably sodium or potassium), m is 2 and n is from 2 to 6, or M is hydrogen, m is 2 and n is 1.

The sulphur used in the processes of the present invention is preferably elemental sulphur or modified sulphur. Modified sulphur, sometimes referred to as plasticised sulphur, is sulphur that has been modified by adding an olefinic compound such as dicyclopentadiene, limonene or styrene. Preferably, elemental sulphur is used.

In several embodiments of the invention, a sulphur product comprising at least 50wt% sulphur is prepared by a process wherein molten sulphur is combined with a compound of formula (I) and/or with a compound of formula (II). The reaction is carried out at a temperature of at least 119°C (the melting point of elemental sulphur), more preferably in the range of from 119°C to 200°C.

When sulphur is combined with both compounds, the molar ratio of the compound of formula (I) to the compound of formula (II) is preferably between 10:1 and 1:1, most preferably about 2:1. Preferably the sulphur product comprises at least 70wt% sulphur, more preferably at least 80wt% sulphur and most preferably at least 90wt% sulphur. Preferably the weight ratio of sulphur to the total weight of compounds (I) and/or (II) is at least 2:1, more preferably at least 4:1, most preferably at least 10:1.

In the embodiments wherein molten sulphur is combined with a compound of formula (I) and with a compound of formula (II), the components are preferably combined in the presence of a phase transfer reagent. The phase transfer reagent is a polar solvent that is liquid at the reaction conditions (i.e. is liquid at 119°C and preferably is liquid from 100°C to 180°C at atmospheric pressure). The weight ratio of phase transfer reagent to the compound of formula (II) is preferably less than 2:1, more preferably about 1:3. Preferred phase transfer reagents include dimethyl sulfoxide, monoethylene glycol and glycerol.

Further components may be incorporated into the sulphur product, but preferably the sulphur product comprises only sulphur and compounds of formula (I) and/or (II), the reaction products thereof and optionally a phase transfer agent. Possible additives include free radical scavengers or waxes. Preferably the amount of additive is less than 5wt% based upon the weight of the sulphur product.

The process for preparing the sulphur product preferably further comprises a step of cooling, wherein the sulphur is solidified and/or a step of pelletising or granulating whereby pellets or granules of the sulphur product are formed.

In an embodiment of the invention, pre-treated filler and/or pre-treated aggregated is prepared by treating filler and/or aggregate with a compound of formula (I). This treatment is preferably carried out in the absence of solvent, or in a solvent such as ethanol. Preferably fine aggregate is treated with a compound of formula (I). Most preferably the fine aggregate is a silicate material such as sand.

The sulphur composite produced by the process of the invention comprises at least 7wt% sulphur and at least 5wt% of filler and/or aggregate, based upon the weight of the sulphur composite. The sulphur composite may be sulphur cement, comprising at least 50wt% sulphur and comprising at least 5wt% filler, based upon the weight of the sulphur composite, and more preferably comprising at least 60wt% sulphur and at least 15wt% filler. The sulphur composite may be sulphur mortar, comprising at least 10wt% sulphur, at least 5wt% filler and at least 30wt% fine aggregate, based upon the weight of the sulphur sulphur composite, more preferably at least 15wt% sulphur, at least 5wt% filler and at least 40wt% fine aggregate. The sulphur composite may be sulphur concrete, comprising at least 8wt% sulphur, at least 5wt% filler and at least 25wt% aggregate. The sulphur composite may be sulphur extended asphalt comprising sulphur, a binder (typically a bituminous binder) and aggregate.

Preferably filler in the sulphur composite is chosen from fly ash, limestone, quartz, iron oxide, alumina, titania, graphite, gypsum, talc, mica, carbon black or combinations thereof, and more preferably is fly ash. Preferably aggregate in the sulphur composite is fine aggregate (most preferably sand) and/or coarse aggregate (most preferably rock or gravel).

In the first embodiment of the process for preparing a sulphur composite, a sulphur product, formed by the reaction of the compounds of formula (I) and (II) in the presence of sulphur, and preferably in the presence of a phase transfer reagent, is combined with filler/aggregate, and optionally is combined with additional sulphur, to provide a sulphur composite. The filler/aggregate can be added to the sulphur product directly after it has been formed (i.e. whilst the sulphur is molten). However, it is preferred that the sulphur product is a solid product, e.g. in the form of pellets or granules, and the solid sulphur product is melted before subsequent addition of the filler/aggregate and optional addition of further sulphur.

In the second embodiment of the process for preparing a sulphur composite, a sulphur product, formed by the combination of a compound of formula (I) with sulphur, is combined with a compound of formula (II), with filler/aggregate and optionally with further sulphur, preferably in the presence of a phase transfer reagent, to provide a sulphur composite. The sulphur product is preferably used in the form of a solid product, e.g. in the form of pellets or granules, that is melted before addition of the compound of formula (II) and the filler/aggregate.

In the third embodiment of the process for preparing a sulphur composite, a sulphur product, formed by the combination of a compound of formula (II) with sulphur, is combined with a compound of formula (I), with filler/aggregate and optionally with further sulphur, preferably in the presence of a phase transfer reagent, to provide a sulphur composite. The sulphur product is preferably used in the form of a solid product, e.g. in the form of pellets or granules, that is melted before addition of the compound of formula (II) and the filler/aggregate.

In the fourth embodiment of the process for preparing a sulphur composite, pre-treated filler and/or pre-treated aggregate, prepared by treating filler and/or aggregate with a compound of formula (I), is combined with a compound of formula (II) and with sulphur, preferably in the presence of a phase transfer reagent, to provide a sulphur composite.

In the fifth embodiment of the process for preparing a sulphur composite, a sulphur product, formed by the combination of a compound of formula (II) with sulphur, is combined with pre-treated filler and/or pre-treated aggregate, prepared by treating filler and/or aggregate with a compound of formula (I), and optionally with additional sulphur, preferably in the presence of a phase transfer reagent. The sulphur product is preferably used in the form of a solid product, e.g. in the form of pellets or granules, that is melted before addition of the pre-treated filler and/or pre-treated aggregate.

In the sixth embodiment of the process for preparing a sulphur composite, sulphur, the compounds of formula (I) and (II) and the filler/aggregate are all combined to form a sulphur composite, preferably in the presence of a phase transfer reagent. The compounds of formula (I) and (II) and the filler/aggregate may all be added at the same time to molten sulphur. Alternatively the compounds of formula (I) and (II) and the filler/aggregate may be added sequentially, in any order, to the molten sulphur. Preferably, the compound of formula (I) and the filler/aggregate are added to the molten sulphur and subsequently the compound of formula (II) is added.

In all embodiments it is preferred that a phase transfer reagent is present when the compound of formula (I) is combined with the compound of formula (II) (or when pre-treated filler is combined with the compound of formula (II)). As described above, the phase transfer reagent is a polar solvent that is liquid at the reaction conditions (i.e. is liquid at 119°C and preferably is liquid from 100°C to 180°C at atmospheric pressure). The weight ratio of phase transfer reagent to the compound of formula (II) is preferably less than 2:1, more preferably about 1:3. Preferred phase transfer reagents include dimethyl sulfoxide, monoethylene glycol and glycerol.

The sulphur composites prepared according to the process of the invention may be used in applications known to the skilled person, e.g. sulphur concrete may be used to manufacture paving slabs and sulphur extended asphalt may be used to manufacture road surfaces.

The inventors have found that preparing organosilane coupling agents in molten sulphur can be effectively used to prepare sulphur composites. However, the preparation of organosilane coupling agents in molten sulphur may also be useful even when the coupling agents are ultimately used in other applications. In this instance, the molten sulphur is essentially acting as a reaction medium rather than as a component of the product.

The present invention provides a process for preparing an organosilane coupling agent, comprising a step of combining a compound of formula (I): 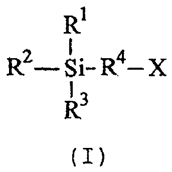 wherein R¹, R² and R³ are independently chosen from alkoxy, acyloxy, aryloxy, alkyl, aryl and halogen, wherein R⁴ is alkylene and wherein X is a leaving group chosen from the group consisting of halogen, carboxylate, nitro, azide, thiocyanate, ammonium, phosphonium and sulfonate; with a compound of formula (II):

MₘSₙ (II)

wherein M is a nitrogen-containing cation, a phosphorus-containing cation or a metal atom, m is 1 or 2 and n is from 1 to 8, or M is hydrogen, m is 2 and n is 1, in the presence of molten sulphur, wherein the weight ratio of sulphur to the compound of formula (I) is at least 1:5.

Preferably the weight ratio of sulphur to the compound of formula (I) is least 1:1, more preferably at least 2:1 and most preferably at least 4:1. The molar ratio of the compound of formula (I) to the compound of formula (II) is preferably between 10:1 and 1:1, most preferably about 2:1.

The process preferably further comprises a step of separating the organosilane coupling agent from the sulphur. This could be achieved by dissolving the reaction product in carbon disulphide or toluene and separating the solvent phase from the sulphur phase. The organosilane compounds may be used as coupling agents in rubber compounds or as adhesion primers for glass and metals.

### Examples

The invention will now be described by reference to examples which are not intended to be limiting of the invention.

### Preparation of Sulphur Mortar

Sulphur mortar samples were prepared. All the samples contained 133g of quartz filler, 199.5g of sand (normzand) and 142.5g sulphur. Two different protocols were used:

### Protocol 1

Sulphur was heated in a crucible (temperature set at 150°C) until molten. Na₂S (if used) was added at 0.027wt% based upon the total weight of the sulphur mortar. Then preheated sand (150°C) was added. 3-chloropropyltriethoxysilane (if used) was distributed on top of the sand (0.06wt% of 3-chloropropyltriethoxysilane based upon the total weight of the sulphur mortar), which was then mixed in. Once the sulphur had melted and the suspension approached homogeneity, quartz filler material (also preheated to 150°C) was added carefully. The resulting paste was stirred, until homogeneous, then allowed to heat at 150°C for 40 minutes, stirring occasionally. After this time, the mixture was poured into pre-heated (150°C) steel cylinder moulds. The samples were allowed to cool, then demoulded.

### Protocol 2

Sulphur was heated in a crucible (temperature set at 150°C) until partly molten, then preheated normzand (Z, 150°C) was added. 3-chloropropyltriethoxysilane (0.06% based upon the total weight of the sulphur mortar) was distributed on top of the sand, which was then mixed in. Once the sulphur had melted and the suspension approached homogeneity, quartz filler material (also preheated to 150°C) was added carefully. The resulting paste was stirred, until homogeneous. Na₂S (0.027% based upon the total weight of the sulphur mortar) was added, then the paste allowed to heat at 150°C for 40 minutes, stirring occasionally. After this time, the mixture was poured into pre-heated (150°C) steel cylinder moulds. The samples were allowed to cool, then demoulded.

The comparative examples and examples are summarised in table 1:

**Table 1**

| | Alkali metal sulphide | Organosilane | Protocol |
|---|---|---|---|
| Comparative Example 1 | 0.027wt% Na₂S | None | 1 |
| Comparative Example 2 | None | 0.06wit% 3-chloropropyltrieth-oxysilane | 1 |
| Example 1 | 0.027wt% Na₂S | 0.06wt% 3-chloropropyltrieth-oxysilane | 1 |
| Example 2 | 0.027wt% Na₂S | 0.06wt% 3-chloropropyltrieth-oxysilane | 1 |
| Example 3 | 0.027wt% Na₂S | 0.06wt% 3-chloropropyltrieth-oxysilane | 2 |

The properties of these samples were assessed using water intrusion experiments. Table 2 shows the amount in % of water intrusion in comparative examples 1-2, examples 1-3, comparative example 3 (a sample using sulphur alone) and comparative example 4 (a sample prepared according to protocol 1 except that bis(3-triethoxysilylpropyl)tetrasulphide is used instead of 3-chloropropyltriethoxysilane). Example 3 reproduces the beneficial performance of the coupling agent in comparative example 4.

**Table 2**

| | Water intrusion (%) after two weeks |
|---|---|
| Comparative Example 1 | 0.44 |
| Comparative Example 2 | 0.27 |
| Example 1 | 0.22 |
| Example 2 | 0.22 |
| Example 3 | 0.01 |
| Comparative Example 3 | 1.31 |
| Comparative Example 4 | 0.04 |

### Preparation of Organosulphides

Organosulphides were prepared and the yield was determined by dissolving the product in CS₂/THF-d₆, characterising with NMR and comparing with an internal reference standard.

Na₂S.9H₂O was mixed with sulphur and phase transfer reagent, held for a time and temperature (1). 3-chloropropyltrimethoxysilane (CPTMS) was added and the mixture was stirred for a time and temperature (2). The reaction mixture was allowed to cool. The phase transfer reagents were dimethyl sulfoxide (DMSO), monoethylene glycol (MEG) and glycerol.

The results are summarised in table 3:

**Table 3**

| | Mass of Sulphur (g) | Mass of Na₂S.9H₂O (g) | Mass of CPTMS (g) | Phase transfer reagent and mass (g) | Time/Temp (1) (°C/min) | Time/Temp (2) (°C/min) | Yield organosulphide (%) |
|---|---|---|---|---|---|---|---|
| Example 4 | 10 | 2.4 | 4 | DMSO, 0.4 | 160/30 | 140/3 | 90 |
| Example 5 | 10 | 2.4 | 4 | MEG, 0.4 | 160/30 | 140/1 | 95 |
| Example 6 | 4.5 | 2.6 | 8 | DMSO, 0.8 | 160/60 | 140/4 | 96 |
| Example 7 | 10 | 1.2 | 2 | Glycerol, 0.34 | 160/30 | 140/3 | 75 |
| Example 8 | 20 | 2.4 | 4 | DMSO, 0.4 | 160/30 | 140/2 | 90 |
| Example 9 | 1.9 | 4.9 | 8 | DMSO, 0.9 | 180/40 | 140/2 | 83 |
| Example 10 | 10 | 4.9 | 8 | DMSO, 0.9 | 200/30 | 140/3 | 86 |

## Claims

1. A process for preparing a sulphur composite comprising at least 7wt% sulphur and at least 5wt% of filler and/or aggregate, comprising combining molten sulphur with filler and/or aggregate, with a compound of formula (I): 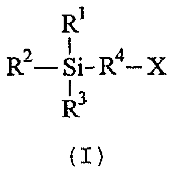 wherein R¹, R² and R³ are independently chosen from alkoxy, acyloxy, aryloxy, alkyl, aryl and halogen, wherein R⁴ is alkylene and wherein X is a leaving group chosen from the group consisting of halogen, carboxylate, nitro, azide, thiocyanate, ammonium, phosphonium and sulfonate; and with a compound of formula (II):
MₘSₙ (II)
wherein M is a nitrogen-containing cation, a phosphorus-containing cation or a metal atom, m is 1 or 2 and n is from 1 to 8, or M is hydrogen, m is 2 and n is 1.

2. A process according to claim 1, wherein molten sulphur is combined with filler and/or aggregate, with a compound of formula (I) and with a compound of formula (II) in the presence of a phase transfer reagent.

3. A process according to claim 1 or claim 2, wherein R¹, R² and R³ are independently chosen from alkoxy groups.

4. A process according to any preceding claim, wherein a sulphur product comprising at least 50wt% sulphur is prepared by a process wherein molten sulphur is combined with a compound of formula (I) and with a compound of formula (II), and the sulphur product is combined with filler/aggregate and optionally with further sulphur.

5. A process according to any one of claims 1 to 3, wherein a sulphur product comprising at least 50wt% sulphur is prepared by a process wherein molten sulphur is combined with a compound of formula (I), and the sulphur product is combined with a compound of formula (II), with filler/aggregate and optionally with further sulphur.

6. A process according to any one of claims 1 to 3, wherein a sulphur product comprising at least 50wt% sulphur is prepared by a process wherein molten sulphur is combined with a compound of formula (II), and the sulphur product is combined with a compound of formula (I), with filler/aggregate and optionally with further sulphur.

7. A process according to any one of claims 1 to 3, wherein pre-treated filler and/or pre-treated aggregate is prepared by treating filler and/or aggregate with a compound of formula (I), and wherein sulphur and a compound of formula (II) are combined with the pre-treated filler and/or pre-treated aggregate.

8. A process according to any one of claims 1 to 3, wherein a sulphur product comprising at least 50wt% sulphur is prepared by a process wherein molten sulphur is combined with a compound of formula (II), wherein pre-treated filler and/or pre-treated aggregate is prepared by treating filler and/or aggregate with a compound of formula (I), and wherein the sulphur product is combined with the pre-treated filler and/or pre-treated aggregate and optionally with further sulphur.

9. A process for preparing an organosilane coupling agent, comprising a step of combining a compound of formula (I): 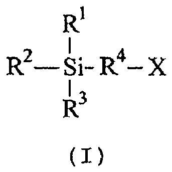 wherein R¹, R² and R³ are independently chosen from alkoxy, acyloxy, aryloxy, alkyl, aryl and halogen, wherein R⁴ is alkylene and wherein X is a leaving group chosen from the group consisting of halogen, carboxylate, nitro, azide, thiocyanate, ammonium, phosphonium and sulfonate; with a compound of formula (II):
MₘSₙ (II)
wherein M is a nitrogen-containing cation, a phosphorus-containing cation or a metal atom, m is 1 or 2 and n is from 1 to 8, or M is hydrogen, m is 2 and n is 1; in the presence of molten sulphur, wherein the weight ratio of sulphur to the compound of formula (I) is at least 1:5.

10. A process according to claim 9, comprising a further step of separating the organosilane coupling agent from the sulphur.

## Patentansprüche

1. Verfahren zur Herstellung eines Schwefelkompositen, umfassend mindestens 7 Gew-% Schwefel und mindestens 5 Gew-% eines Füllstoffs und/oder eines Aggregats, umfassend ein Kombinieren von flüssigem Schwefel mit Füllstoff und/oder Aggregat, mit einer Verbindung der Formel (I): 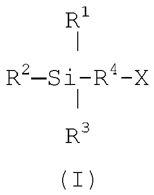 wobei R¹, R² und R³ unabhängig voneinander ausgewählt sind aus Alkoxy, Acyloxy, Aryloxy, Alkyl, Aryl und Halogen, wobei R⁴ Alkylen ist und wobei X eine Abgangsgruppe ist, ausgewählt aus der Gruppe, bestehend aus Halogen, Carboxylat, Nitro, Azid, Thiocyanat, Ammonium, Phosphonium und Sulfonat; und mit einer Verbindung der Formal (II):
MₘSₙ (II)
wobei M ein stickstoffenthaltendes Kation, ein phosphorenthaltendes Kation oder ein Metallatom ist, m 1 oder 2 ist und n 1 bis 8 ist, oder M ein Wasserstoff ist, m 2 und n 1 ist.

2. Verfahren nach Anspruch 1, wobei der geschmolzene Schwefel mit einem Füllstoff und/oder Aggregat, mit einer Verbindung der Formel (I) und mit einer Verbindung der Formel (II) im Beisein eines Phasentransferreagenses kombiniert wird.

3. Verfahren nach einem der Ansprüche 1 oder 2, wobei R¹, R² and R³ unabhängig voneinander ausgewählt sind aus Alkoxygruppen.

4. Verfahren nach einem der vorhergehden Ansprüche, wobei ein Schwefelprodukt, umfassend mindestens 50 Gew.% Schwefel durch ein Verfahren hergestellt wird, bei dem geschmolzener Schwefel mit einer Verbindung der Formel (I) und mit einer Verbindung der Formel (II) kombiniert wird, und das Schwefelprodukt mit Füllstoff/Aggregat und optional mit weiterem Schwefel kombiniert wird.

5. Verfahren nach einem der Ansprüche 1 bis 3, wobei ein Schwefelprodukt, umfassend mindestens 50 Gew.% Schwefel, durch ein Verfahren hergestellt wird, bei dem geschmolzener Schwefel mit einer Verbindung der Formel (I) kombiniert wird, und das Schwefelprodukt mit einer Verbindung der Formel (II), mit Füllstoff/Aggregat und optional mit weiterem Schwefel kombiniert wird.

6. Verfahren nach einem der Ansprüche 1 bis 3, wobei ein Schwefelprodukt, umfassend mindestens 50 Gew.% Schwefel, durch ein Verfahren hergestellt wird, bei dem geschmolzener Schwefel mit einer Verbindung der Formal (II) kombiniert wird, und das Schwefelprodukt mit einer Verbindung der Formel (I), mit Füllstoff/Aggregat und optinal mit weiterem Schwefel kombiniert wird.

7. Verfahren nach einem der Ansprüche 1 bis 3, wobei vorbehandelter Füllstoff und/oder vorbehandeltes Aggregat durch Behandeln des Füllstoffs und/oder des Aggregats mit einer Verbindung der Formel (I) hergestellt wird, und wobei Schwefel und eine Verbindung der Formel (II) mit dem vorbehandelten Füllstoff und/oder dem vorbehandelten Aggregat kombiniert werden.

8. Verfahren nach einem der Ansprüche 1 bis 3, wobei ein Schwefelprodukt, umfassend mindestens 50 Gew.% Schwefel durch ein Verfahren hergestellt wird, bei dem geschmolzener Schwefel mit einer Verbindung der Formel (II) kombiniert wird, wobei vorbehandelter Füllstoff und/oder vorbehandeltes Aggregat durch Behandeln des Füllstoffs und/oder des Aggregats mit einer Verbindung der Formel (I) hergestellt wird, und wobei das Schwefelprodukt mit dem vorbehandelten Füllstoff und/oder dem vorbehandelten Aggregat und optinal mit weiterem Schwefel kombiniert wird.

9. Verfahren zur Herstellung eines Organosilan-Kupplungsmittels, umfassend einen Schritt des Kombinierens einer Verbindung der Formel (I): 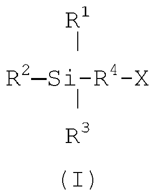 wobei R¹, R² und R³ unabhängig voneinander ausgewählt sind von Alkoxy, Acyloxy, Aryloxy, Alkyl, Aryl und Halogen, wobei R⁴ Alkylen ist und wobei X eine Abgangsgruppe ist, ausgewählt aus der Gruppe, bestehend aus Halogen, Carboxylat, Nitro, Azid, Thiocyanat, Ammonium, Phosphonium und Sulfonat; mit einer Verbindung der Formel (II):
MₘSₙ (II)
wobei M ein stickstoffenthaltendes Kation, ein phosphorenthaltendes Kation oder ein Metallatom ist, m 1 oder 2 ist und n 1 bis 8 ist, oder M Wasserstoff ist, m 2 und n 1 ist, in Anwesenheit von geschmolzenem Schwefel, wobei das Gewichtsverhältnis von Schwefel zur Verbindung der Formel (I) mindestens 1:5 ist.

10. Verfahren nach Anspruch 9, umfassend einen weiteren Schritt des Abtrennens des Organosilan-Kupplungsmittels vom Schwefel.

## Revendications

1. Procédé de préparation d'un composite de soufre comprenant au moins 7 % en poids de soufre et au moins 5 % en poids d'une charge et/ou d'un agrégat, comprenant la combinaison de soufre fondu avec une charge et/ou un agrégat, avec un composé de formule (I) : 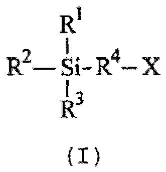 dans laquelle R¹, R² et R³ sont indépendamment choisis parmi les groupes alcoxy, acyloxy, aryloxy, alkyle, aryle et un atome d'halogène,
dans laquelle R⁴ est un groupe alkylène et dans laquelle X est un groupe partant choisi dans le groupe constitué par un atome d'halogène, un groupe carboxylate, nitro, azide, thiocyanate, ammonium, phosphonium et sulfonate ; et avec un composé de formule (II) :
MₘSₙ (II)
dans laquelle M est un cation contenant de l'azote, un cation contenant du phosphore ou un atome de métal, m vaut 1 ou 2 et n vaut 1 à 8, ou M est un atome d'hydrogène, m vaut 2 et n vaut 1.

2. Procédé selon la revendication 1, dans lequel le soufre fondu est combiné avec la charge et/ou l'agrégat, avec un composé de formule (I) et avec un composé de formule (II) en présence d'un réactif de transfert de phase.

3. Procédé selon la revendication 1 ou la revendication 2, dans lequel R¹, R² et R³ sont indépendamment choisis parmi les groupes alcoxy.

4. Procédé selon l'une quelconque des revendications précédentes, dans lequel un produit de soufre comprenant au moins 50 % en poids de soufre est préparé par un procédé dans lequel du soufre fondu est combiné avec un composé de formule (I) et avec un composé de formule (II), et le produit de soufre est combiné avec la charge/l'agrégat et facultativement avec du soufre supplémentaire.

5. Procédé selon l'une quelconque des revendications 1 à 3, dans lequel un produit de soufre comprenant au moins 50 % en poids de soufre est préparé par un procédé dans lequel du soufre fondu est combiné avec un composé de formule (I) et le produit de soufre est combiné avec un composé de formule (II), avec une charge/un agrégat et facultativement avec du soufre supplémentaire.

6. Procédé selon l'une quelconque des revendications 1 à 3, dans lequel un produit de soufre comprenant au moins 50 % en poids de soufre est préparé par un procédé dans lequel du soufre fondu est combiné avec un composé de formule (II) et le produit de soufre est combiné avec un composé de formule (I), avec une charge/un agrégat et facultativement avec du soufre supplémentaire.

7. Procédé selon l'une quelconque des revendications 1 à 3, dans lequel une charge prétraitée et/ou un agrégat prétraité sont préparés en traitant la charge et/ou l'agrégat avec un composé de formule (I), et dans lequel du soufre et un composé de formule (II) sont combinés avec la charge prétraitée et/ou l'agrégat prétraité.

8. Procédé selon l'une quelconque des revendications 1 à 3, dans lequel un produit de soufre comprenant au moins 50 % en poids de soufre est préparé par un procédé dans lequel du soufre fondu est combiné avec un composé de formule (II), dans lequel la charge prétraitée et/ou l'agrégat prétraité sont préparés en traitant la charge et/ou l'agrégat avec un composé de formule (I), et dans lequel le produit de soufre est combiné avec la charge prétraitée et/ou l'agrégat prétraité et facultativement avec du soufre supplémentaire.

9. Procédé de préparation d'un agent de couplage organosilane, comprenant une étape de combinaison d'un composé de formule (I) : 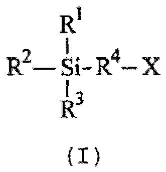 dans laquelle R¹, R² et R³ sont indépendamment choisis parmi les groupes alcoxy, acyloxy, aryloxy, alkyle, aryle et un atome d'halogène,
dans laquelle R⁴ est un groupe alkylène et dans laquelle X est un groupe partant choisi dans le groupe constitué par un atome d'halogène, un groupe carboxylate, nitro, azide, thiocyanate, ammonium, phosphonium et sulfonate ; avec un composé de formule (II) :
MₘSₙ (II)
dans laquelle M est un cation contenant de l'azote, un cation contenant du phosphore ou un atome de métal, m vaut 1 ou 2 et n vaut 1 à 8, ou M est un atome d'hydrogène, m vaut 2 et n vaut 1 ; en présence de soufre fondu, dans lequel le rapport en poids entre le soufre et le composé de formule (I) est d'au moins 1 : 5.

10. Procédé selon la revendication 9, comprenant une étape supplémentaire consistant à séparer l'agent de couplage organosilane du soufre.
